# EUROPÄISCHE PATENTSCHRIFT

(11) **EP 2 574 526 B1**
(45) Veröffentlichungstag und Bekanntmachung des Hinweises auf die Patenterteilung: **23.10.2019**
(21) Anmeldenummer: 12175232.3
(22) Anmeldetag: 06.07.2012
(51) Int. Cl.: B62D 55/10, B62D 55/116, B62D 55/30, B62D 55/02, B62D 55/065

(54) **Fahrzeug mit Raupenfahrwerk**
Vehicle with track assembly
Véhicule à chenilles

(30) Priorität: 29.09.2011 DE 102011114536
(43) Veröffentlichungstag der Anmeldung: 03.04.2013
(73) Patentinhaber: CLAAS Selbstfahrende Erntemaschinen GmbH, 33428 Harsewinkel (DE)
(72) Erfinder: Schulz, Waldemar, 49080 Osnabrück (DE); Wagemann, Sebstatian, 59302 Oelde (DE); Behra, Jan Philipp, 33332 Gütersloh (DE); Obermeier-Hartmann, Robert, 33142 Büren (DE); Rackow, Sascha, 33106 Paderborn (DE); Mümken, Philipp, 70599 Stuttgart (DE)
(74) Vertreter: CLAAS Gruppe

(56) Entgegenhaltungen:
- EP-A2- 1 361 143
- GB-A- 2 393 696
- US-A- 4 500 139
- US-B1- 6 224 172
- US-E- R E36 284

## Beschreibung

Die vorliegende Erfindung betrifft ein Fahrzeug, insbesondere ein landwirtschaftliches Fahrzeug wie etwa einen Traktor, einen Mähdrescher, einen Feldhäcksler, einen Roder oder dergleichen, mit wenigstens einem Raupenfahrwerk. Indem ein solches Raupenfahrwerk eine Mehrzahl von in Fahrtrichtung des Fahrzeugs hintereinander angeordneten und von einem Gurtband umschlungenen tragenden Rollen aufweist, kann das Gewicht des Fahrzeugs auf eine große Aufstandfläche verteilt werden, und eine bodenschädigende Verdichtung kann auch bei hohem Gewicht des Fahrzeugs zumindest weitgehend vermieden werden.

Ein Problem beim Einsatz von Raupenfahrwerken ist jedoch deren eingeschränkte Manövrierfähigkeit. Ein Richtungswechsel ist bei einem Raupenfahrwerk nur möglich, wenn das Gurtband am vorderen und hinteren Ende der Aufstandsfläche quer zu seiner Abrollrichtung gleiten kann. Bei Fahren auf unnachgiebigem Untergrund wird wie etwa einer asphaltierten Straße ist das Gurtband daher beim Kurvenfahren hohen Scherkräften ausgesetzt, die einen starken Verschleiß bewirken. Beim Fahren auf nachgiebigem Untergrund wie etwa einer landwirtschaftlichen Nutzfläche kann das Gurtband beim Kurvenfahren Teile des befahrenen Bodens seitwärts mitreißen, sodass in diesem Fall die Beanspruchung des Gurtbandes geringer ist. Die stattdessen resultierende Scherbewegung des Bodens kann jedoch dort zu Schäden führen, insbesondere durch die damit verbundene Zerstörung von Wurzelwerk, beispielsweise einer Grasnarbe.

Darüber hinaus sind die zum Lenken eines Fahrzeugs mit Raupenfahrwerk an der gelenkten Achse erforderlichen Kräfte in der Praxis allenfalls durch eine Servolenkung bereitstellbar, sodass, wenn die Antriebsenergiequelle des Fahrzeugs ausfällt und das Fahrzeug abgeschleppt werden muss, es nur noch unter extremen Schwierigkeiten lenkbar ist und gesetzliche Vorgaben hinsichtlich der vom Fahrer auszuübenden Lenkkraft nur noch schwerlich erfüllbar sind. Während bei einem Fahrzeug mit ungelenktem Raupenfahrwerk und einer gelenkten Radachse ein Lenken in einer solchen Situation zwar eine erhebliche Anstrengung des Fahrers erfordert, aber nicht völlig ausgeschlossen ist, übersteigt das Lenken eines Raupenfahrwerks die Kräfte jedes Fahrers. Folglich kann ein solches Fahrzeug im Pannenfall nur zur Werkstatt befördert werden, indem es auf ein Transportfahrzeug aufgeladen wird, was für den Anwender mit spürbaren Mehrkosten verbunden ist.

Aus DE 203 17 076 U1 ist ein landwirtschaftliches Fahrzeug mit Raupenfahrwerk nach dem Oberbegriff des Anspruchs 1 bekannt. Dieses Raupenfahrwerk hat als tragende Rollen zwei großformatige Umlenkrollen und zwischen diesen eine Mehrzahl von kleineren Stützrollen kann somit der Verschleiß des Gurtbands bei Straßenfahrt oder die Scherbelastung des Bodens beim Manövrieren auf landwirtschaftlicher Fläche verringert werden, doch das Problem mangelnder Manövrierbarkeit im Störungsfall besteht auch hier, da bei einem Ausfall der Antriebsenergiequelle auch eine Verstellung der Stützrollen nicht mehr möglich ist.

Die Druckschrift US R E36 284 E offenbart ein Raupen Aufhängungssystem für ein Fahrzeug, das einen Lenkarm aufweist. Ein Ventilsystem ist dafür vorgesehen, den Lenkarm in einen Dämpfungsmodus für den Erntebetrieb oder auf der Straße einzustellen, oder in einen nicht gedämpften Modus für sehr nachgiebige Felder oder für die Reparatur des Hydrauliksystems. Das Ventilsystem umfasst einen Akkumulator. Aufgabe der vorliegenden Erfindung ist, ein Fahrzeug mit Raupenfahrwerk zu schaffen, das auch im Störungsfall, beim Ausfall seiner Antriebsenergiequelle, manövrierbar bleibt.

Die Aufgabe wird gelöst, indem bei einem Fahrzeug, insbesondere einem landwirtschaftlichem Fahrzeug, mit wenigstens einem Raupenfahrwerk, das eine Mehrzahl von in Fahrtrichtung des Fahrzeugs hintereinander angeordneten und von einem Gurtband umschlungenen tragenden Rollen aufweist, wobei die Rollen durch wenigstens ein Stellglied zwischen einer ersten Konfiguration, in der alle tragenden Rollen belastet sind, und einer zweiten Konfiguration, in der wenigstens eine äußere der tragenden Rollen entlastet ist, verstellbar sind, und einer Antriebsenergiequelle zum Liefern von zum Verstellen der Konfiguration benötigter Antriebsenergie ein Energiespeicher durch die Antriebsenergiequelle aufladbar und mit dem Stellglied verbindbar ist, um dem Stellglied die zum Verstellen der Konfiguration benötigte Antriebsenergie bereitzustellen.

Das Stellglied kann in einer inneren der tragenden Rollen eingreifen, um diese in an sich bekannter aufladbar und mit dem Stellglied verbindbar ist, um dem Stellglied die zum Verstellen der Konfiguration benötigte Antriebsenergie bereitzustellen.

Das Stellglied kann in einer inneren der tragenden Rollen eingreifen, um diese in an sich bekannter Weise relativ zu einem Laufwerkswagen des Raupenfahrwerks und den an diesem aufgehängten äußeren Rollen abwärts zu drücken und so den Laufwerkswagen mit samt den äußeren Rollen anzuheben. Denkbar ist aber auch, das Stellglied an den äußeren Rollen angreifen zu lassen, um diese relativ zum Laufwerkswagen und der wenigstens einen inneren Rolle anzuheben.

Erfindungsgemäß ist die Antriebsenergiequelle eine Quelle für ein unter Überdruck stehendes Arbeitsfluid, und der Energiespeicher ist ein erster Druckspeicher, der in der Lage ist, eine bestimmte Menge dieses Arbeitsfluids aufzunehmen.

Das Stellglied ist ferner mit einem zweiten Druckspeicher verbindbar, dessen Betriebsdruck niedriger als der des ersten Druckspeichers ist, um durch Verlagern von Fluid zwischen dem Stellglied und dem zweiten Druckspeicher eine Federbewegung der tragenden Rolle zu ermöglichen, an der das Stellglied angreift.

Ein Wegeventil ist erfindungsgemäß vorgesehen, um das Stellglied entweder mit dem ersten oder dem zweiten Drückspeicher zu verbinden. Solange das Stellglied mit dem zweiten Druckspeicher verbunden ist, ist eine Federbewegung der tragenden Rolle möglich; ist es hingegen mit dem ersten Druckspeicher verbunden, dann nimmt das Stellglied die zweite Konfiguration mit verkürzter Aufstandsfläche ein.

Erfindungsgemäß weist das Wegeventil einen mit der Antriebsenergiequelle verbundenen Steuereingang auf, so dass bei einer Störung der Antriebsenergiequelle, die zum Wegfall des Überdrucks des Arbeitsfluids führt, automatisch die Verbindung zum ersten Druckspeicher herstellt und so den Übergang in die zweite Konfiguration bewirkt. Eine Steuereinheit des Fahrzeugs kann vorgesehen sein, um automatisch bei Geradeausfahrt die erste und bei Kurvenfahrt die zweite Konfiguration des Raupenfahrwerks einzustellen. Dies ist insbesondere beim Fahren auf landwirtschaftlicher Fläche nützlich, da beim Geradeausfahren das Gewicht des Fahrzeugs auf eine große Aufstandfläche verteilt ist, während beim Kurvenfahren die Verkürzung der Aufstandsfläche in der zweiten Konfiguration die Scherbelastung des Bodens vermindert.

Die Steuereinheit kann ferner eingerichtet sein, unterhalb einer Grenzgeschwindigkeit die erste und oberhalb der Grenzgeschwindigkeit die zweite Konfiguration des Raupenfahrwerks einzustellen, so dass bei schneller Fahrt auf einer Straße automatisch die das Raupenfahrwerk schonende zweite Konfiguration eingenommen wird.

Die automatische Verkürzung der Aufstandsfläche bei Ausfall der Antriebsenergiequelle führt dazu, dass die Kraft, die das Fahrzeug einem Richtungswechsel entgegensetzt, erheblich geringer ist, als wenn das Laufwerk in der ersten Konfiguration verbleibt. Daher kann ein Raupenlaufwerk, das bei Ausfall des Antriebsaggregats selbsttätig in die zweite Konfiguration übergeht, auch lenkbar, d.h. um eine vertikale Achse schwenkbar mit der Karosserie des Fahrzeugs verbunden, sein, ohne das dies die Manövrierfähigkeit des Fahrzeugs im Abschleppfall in Frage stellt.

Die Steuereinheit kann außerdem eingerichtet sein, den Schlupf des Fahrzeugs abzuschätzen und bei einem Schlupf oberhalb eines Grenzwerts die erste und unterhalb des Grenzwerts die zweite Konfiguration des Raupenfahrwerks einzustellen. So kann bei zu starkem Schlupf, insbesondere beim Fahren auf nachgiebigem Ackerboden, die Traktion des Fahrzeugs durch Übergang in die zweite Konfiguration verbessert werden, während bei geringem Schlupf, insbesondere auf einer befestigten Straße, die erste Konfiguration verwendet wird, um schnelles Fahren zu ermöglichen und gleichzeitig die Gurtbänder zu schonen.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Ansicht eines erfin-dungsgemäßen landwirtschaftlichen Fahr-zeugs im Normalbetrieb;
- Fig. 2: eine Seitenansicht des Fahrzeugs mit aus-gefallenem Antriebsaggregat;
- Fig. 3: eine zu Fig. 2 analoge Ansicht gemäß ei-ner zweiten Ausgestaltung;
- Fig. 4: eine zu Fig. 2 analoge Ansicht gemäß ei-ner dritten Ausgestaltung; und
- Fig. 5: eine schematische Darstellung eines Hyd-rauliksystems zum Verstellen der Stützrä-dern an den Fahrzeugen der Fig. 1 bis 4.

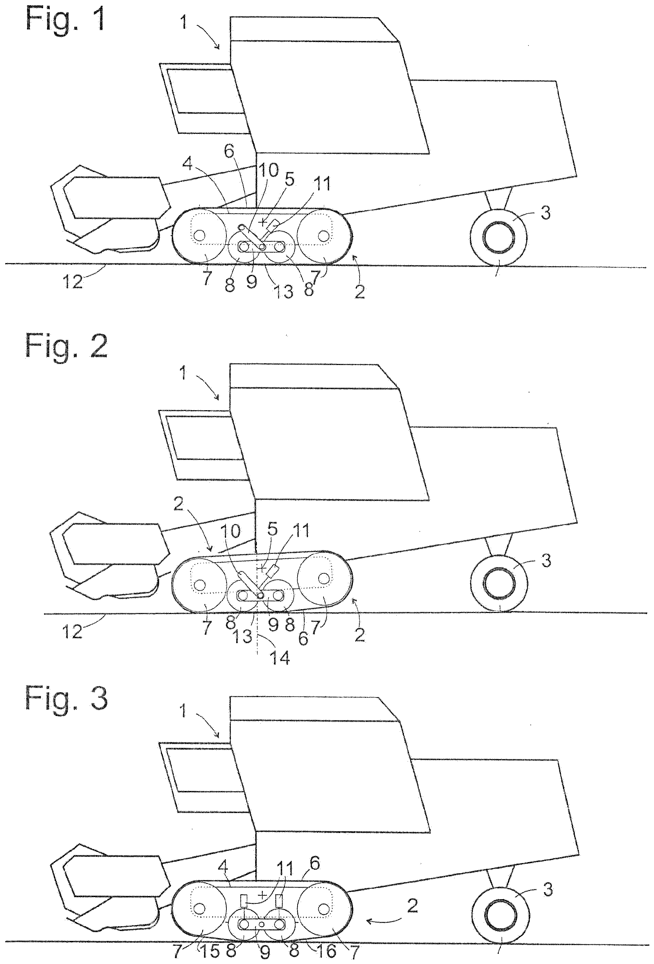

Das in Fig. 1 in einer schematischen Seitenansicht gezeigte Fahrzeug ist ein Mähdrescher, doch die im Nachfolgenden erläuterten Prinzipien der Erfindung sind auch auf andere Typen von landwirtschaftlichen Fahrzeugen wie etwa Traktoren, Feldhäcksler, Roder oder dergleichen übertragbar.

Das Fahrwerk des Mähdreschers der Fig. 1 umfasst ein Raupenfahrwerk 2, das den überwiegenden Teil des Gewichts des Mähdreschers 1 trägt, sowie eine hintere Achse mit bereiften Hinterrädern 3. Die Hinterräder 3 sind lenkbar, während die beiden Raupenschiffe des Raupenfahrwerks 2 fest in Längsrichtung des Mähdreschers 1 ausgerichtet sind. Jedes der recht und links an der Karosserie des Mähdreschers 1 angebrachten Raupenschiffe umfasst einen Laufwerkswagen 4, der um eine Achse 5, die sich in Querrichtung der Mähdrescherkarosserie erstreckt, an diese schwenkbar angelenkt ist. Von einem Gurtband 6 umschlungene Umlenkrollen 7 sind am Laufwerkswagen 4 montiert. Eine der Umlenkrollen 7 ist durch eine Antriebsenergiequelle des Mähdreschers angetrieben. Die Antriebsenergiequelle umfasst in typischer und dem Fachmann vertrauter Weise einen in der Figur nicht dargestellten Dieselmotor und ein Getriebe für die Drehmomentübertragung vom Dieselmotor auf die Umlenkrolle 7.

Zwischen den Umlenkrollen 7 sind jeweils mehrere Stützrollen 8, hier zwei Stück, angeordnet. Ein gemeinsamer Träger 9 der Stützrollen 8 ist über eine Schwinge 10 an den Laufwerkswagen 4 angelenkt. Ein an der Schwinge 10 und am Laufwerkswagen 4 angreifender Druckzylinder 11 hält die Stützrollen 8 elastisch gegen den Untergrund 12 gedrückt. Die elastische Auslenkbarkeit des Druckzylinders 11 und die Tatsache, dass der Träger 9 seinerseits schwenkbar mit der Schwinge 10 verbunden ist, erlaubt es den Stützrollen 8, eventuellen Unebenheiten des Untergrunds 12 auszuweichen und dabei eine gleichmäßige Verteilung des Gewichts des Mähdreschers auf der gesamten Aufstandsfläche 13 des Fahrwerks, auf einer dem Achsabstand der Umlenkrollen 7 entsprechende Länge, aufrechtzuerhalten.

Fig. 2 zeigt den gleichen Mähdrescher wie Fig. 1, allerdings mit einer veränderten Konfiguration der Rollen 7, 8 am Raupenfahrwerk 2. Der Druck auf den Druckzylinder 11 ist in dieser Konfiguration erhöht, sodass sich der Druckzylinder 11 entgegen dem auf ihm anteilig lastenden Gewicht des Mähdreschers ausstreckt und die Schwinge 10 im Uhrzeigersinn schwenkt, sodass der Träger 9 mit den Stützrollen 8 vom Laufwerkswagen 4 nach unten weggedrückt wird. Die hintere Umlenkrolle 7 ist dadurch vom Untergrund 12 abgehoben, und die Aufstandsfläche 13 ist verkürzt auf den Abstand zwischen der Achse der vorderen Umlenkrolle 7 und der Achse der hinteren Stützrolle 8. Da das Gewicht der Mähdrescherkarosserie auf dem Raupenfahrwerk 2 über die zwischen den beiden Stützrollen 8 verlaufende Achse 5 lastet, tragen diese nun einen größeren Anteil am Gewicht des Mähdreschers 1 als die den Untergrund 12 noch berührende vordere Umlenkrolle 7. Daher treten, wenn der Mähdrescher 1 durch Einschlagen der Hinterräder 3 in eine Kurve gelenkt wird, im vorderen Bereich der Aufstandsfläche 13, zwischen der vorderen Umlenkrolle 7 und der vorderen Stützrolle 8, nur geringe Reibkräfte auf. Eine Momentanachse 14 der Drehbewegung, die das Gurtband 6 während der Kurvenfahrt relativ zum Untergrund 12 vollführt, liegt zwischen den beiden Stützrollen 8, so dass der Schlupf des Gurtbandes 6 in Querrichtung dort, wo die beiden Stützrollen 8 auf ihm lasten und die Reibkräfte dementsprechend groß sind, gering ist. Der wesentlich größere Schlupf an der vorderen Umlenkrolle 7 strapaziert das Gurtband 6 aufgrund der geringen von dieser Umlenkrolle 7 getragenen Last nur wenig. Daher genügt eine relativ geringe Lenckraft an den hinteren Rädern 3, die notfalls von einem Fahrer des Mähdreschers auch von Hand, ohne Unterstützung eines Servomechanismus, ausgeübt werden kann, um den Mähdrescher 1 in eine Kurve zu zwingen.

Fig. 3 zeigt eine abgewandelte Ausgestaltung des Mähdreschers 1, bei der der Träger 9 der Stützrollen 8 relativ zum Laufwerkswagen 4 und den Umlenkrollen 7 parallel verstellbar ist, hier mit Hilfe von zwei parallel betriebenen Druckzylindern 11. Ein solcher Aufbau erlaubt es, durch Abwärtsdrücken des Trägers 9 beide Umlenkrollen 7 vom Untergrund 12 abzuheben und so die Aufstandsfläche auf den Achsabstand der Stützrollen 8 zu verkürzen. So kann ein Schleifen des Gurtbands 6 am Untergrund quer zur Fahrtrichtung in dessen sich vor bzw. hinter den Stützrollen 8 erstreckenden Abschnitten 15, 16 vollends vermieden werden.

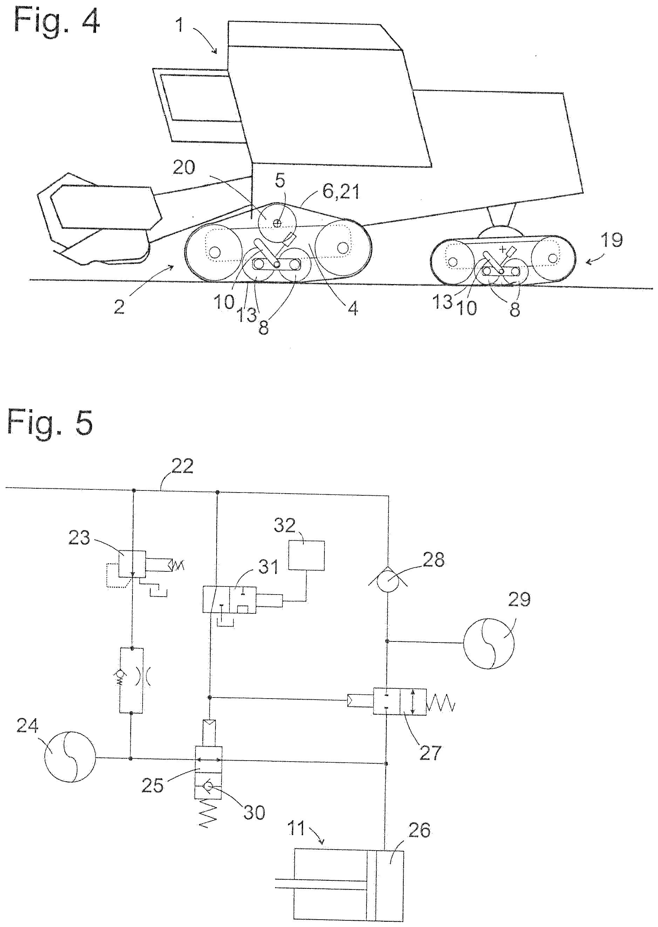

Fig. 4 zeigt einen Mähdrescher 1 mit vorderen und hinteren Raupenfahrwerken 2, 19. Das vordere Raupenfahrwerk 2 ist hier vom Stocks-Typ, mit einer angetrieben Rolle 20, die über den Stützrollen 8 angeordnet ist und auf einen oberen Strang 21 des Gurtbandes 6 wirkt, und deren Drehachse gleichzeitig die Schwenkachse 5 des Laufwerkswagens 4 relativ zur Mähdrescherkarosserie ist. Das hintere Raupenfahrwerk 19 trägt einen kleineren Anteil am Gewicht des Mähdreschers 1 als das vordere Raupenfahrwerk 2 und ist daher kleiner. Beide Raupenfahrwerke 2, 19 haben über eine Schwinge 10 an ihren Laufwerkswagen 4 angelenkte Stützrollen 8, die in der Fig. in nach unten ausgefahrener Stellung gezeigt sind, in der jeweils nur eine der Umlenkrollen 7 Kontakt mit dem Untergrund 12 hat. Die kurze Aufstandsfläche 13, insbesondere des hinteren Raupenfahrwerks 19, erlaubt auch hier im Notfall ein Lenken ohne Servounterstützung.

Fig. 5 zeigt schematisch ein Hydrauliksystem zum Verstellen der Stützrollen 8. Eine Hochdruckleitung 22 ist mit einer nicht dargestellten Druckpumpe der Antriebsenergiequelle verbunden. Solange die Antriebsenergiequelle ordnungsgemäß arbeitet, kann der Druck auf der Hochdruckleitung 22 z.B. typischerweise 180 bar betragen. Ein Druckminderer 23 mit einem Ausgangsdruck von z.B. 100 bar ist an die Hochdruckleitung 22 angeschlossen und versorgt einen Druckspeicher 24. Ein erstes Wegeventil 25 befindet sich bei normalem Geradeaus-Fahrbetrieb, wie in der Figur dargestellt, in einer in zwei Richtungen durchlässigen Stellung und verbindet so den Druckspeicher 24 mit einer Arbeitskammer 26 des Druckzylinders 11. In dieser Stellung kann der Druckzylinder 11 durch Verlagerung von Hydraulikfluid aus der Arbeitskammer 26 in den Druckspeicher 24 federnd nachgeben, wenn die Stützrollen 8 eine Erhebung des Untergrunds passieren, oder angetrieben von Hydraulikfluid aus dem Druckspeicher 24 ausfahren, wenn die Stützrollen eine Senke passieren.

Ein zweites Wegeventil 27 ist zwischen der Arbeitskammer 26 und einem zweiten, über ein Rückschlagventil 28 auf dem Druck der Hochdruckleitung 22 gehaltenen Druckspeicher 29 angeordnet. Dieses Wegeventil 27 sperrt bei normaler Geradeausfahrt.

Im Falle einer Störung des Antriebsaggregats bricht der Druck auf der Hochdruckleitung 22 zusammen, und die beiden Wegeventile 25, 27, die mit der Hochdruckleitung 22 verbundene Steuereingänge aufweisen, ändern ihren Zustand. Das erste Wegeventil 25 schaltet nun ein Rückschlagventil 30 zwischen die Arbeitskammer 26 und den ersten Druckspeicher 24. Die Orientierung des Rückschlagventils 30 ist so gewählt, dass die Arbeitskammer 26 einen höheren Druck annehmen kann als der Druckspeicher 24. Gleichzeitig öffnet das Wegeventil 27 und beaufschlagt die Arbeitskammer 26 mit dem im Druckspeicher 29 erhalten gebliebenen Hochdruck. Dadurch fährt der Druckzylinder 11 aus, und die von ihm gesteuerten Stützrollen 8 nehmen die in Fig. 2, 3 oder 4 gezeigte Konfiguration ein. So ist die Lenkbarkeit des Mähdreschers 1 auch bei Ausfall des Antriebsaggregats gewährleistet, sodass er abgeschleppt und dabei einem abschleppenden Fahrzeug nachgelenkt werden kann.

Einer Weiterbildung zufolge ist ein drittes Wegeventil 31 zwischen der Hochdruckleitung 22 und den Steuereingängen der Wegeventile 25, 27 angeordnet. Das Wegeventil 31 kann mechanisch, z.B. durch Kopplung an einen Steuerknüppel des Mähdreschers 1, oder elektrisch, z.B. durch eine an die Lenkung des Mähdreschers gekoppelte elektronische Steuereinheit 32, betätigbar sein. Bei Geradeausfahrt befindet sich das Wegeventil 31 in der in Fig. 5 gezeigten Stellung. Bei Kurvenfahrt nimmt es eine zweite Stellung ein, in der es die Steuereingänge drucklos schaltet. So geht das Raupenfahrwerk bei jeder Kurve automatisch in die angehobene Konfiguration gemäß einer der Fig. 2 bis 4 über, und die Scherbelastung des Untergrundes ist reduziert.

Die Steuereinheit 32 kann auch ausgelegt sein, um das Wegeventil 31 abhängig von der Geschwindigkeit des Mähdreschers 1 anzusteuern und so dafür zu sorgen, dass das Raupenfahrwerk 2 und/oder 19 in die angehobene Konfiguration übergeht, sobald der Mähdrescher eine - typischerweise beim Feldeinsatz nicht erreichte - Grenzgeschwindigkeit überschreitet. So ist die Schonung des Gurtbandes 6 im Straßenverkehr ohne Eingriff durch den Fahrer gewährleistet.

Eine dritte Möglichkeit, die Konfiguration des Raupenfahrwerks 2 und/oder 19 automatisch einzustellen, basiert auf der Abschätzung des Schlupfs des Fahrzeugs durch die Steuereinheit 32. Solange beim Fahren in der angehobenen zweiten Konfiguration die Drehgeschwindigkeit der Rollen aller Raupenfahrwerke 2, 19 und ggf. Räder 3 um nicht mehr als einen vorgegebenen ersten Grenzwert von den in Anbetracht von Fahrgeschwindigkeit und Bahnradius des Fahrzeugs zu erwartenden Werten abweichen, ist der Schlupf des Fahrzeugs gering. Bei Überschreitung des Grenzwertes erhöht die Steuereinheit 32 die Traktion durch Übergang in die erste Konfiguration. In der ersten Konfiguration ist ein zweiter Grenzwert des Schlupfs festgelegt, dessen Unterschreitung zur Rückkehr in die zweite Konfiguration führt. So schaltet die Steuereinheit auf nachgiebigem, rutschigem Untergrund wie etwa auf Ackerfläche automatisch in die erste, auf festem Untergrund hingegen automatisch in die zweite Konfiguration.

### Bezugszeichen

- 1: Mähdrescher
- 2: Raupenfahrwerk
- 3: Hinterrad
- 4: Laufwerkwagen
- 5: Achse
- 6: Gurtband
- 7: Umlenkrolle
- 8: Stützrolle
- 9: Träger
- 10: Schwinge
- 11: Druckzylinder
- 12: Untergrund
- 13: Aufstandsfläche
- 14: Momentanachse
- 15: Abschnitt
- 16: Abschnitt
- 19: Raupenfahrwerk
- 20: angetriebene Rolle
- 21: Strang
- 22: Hochdruckleitung
- 23: Druckminderer
- 24: Druckspeicher
- 25: Wegeventil
- 26: Arbeitskammer
- 27: Wegeventil
- 28: Rückschlagventil
- 29: Druckspeicher
- 30: Rückschlagventil
- 31: Wegeventil
- 32: Steuereinheit

## Patentansprüche

1. Fahrzeug, insbesondere landwirtschaftliches Fahrzeug (1), mit wenigstens einem Raupenfahrwerk (2; 19), das eine Mehrzahl von in Fahrtrichtung des Fahrzeugs hintereinander angeordneten und von einem Gurtband (6) umschlungenen tragenden Rollen (7, 8) aufweist, wobei die Rollen (7, 8) durch wenigstens ein Stellglied (11) zwischen einer ersten Konfiguration, in der alle tragenden Rollen (7, 8) belastet sind, und einer zweiten Konfiguration, in der wenigstens eine äußere (7) der tragenden Rollen (7, 8) entlastet ist, verstellbar sind, und einer Antriebsenergiequelle zum Liefern von zum Verstellen der Konfiguration benötigter Antriebsenergie, wobei ein Energiespeicher (29) durch die Antriebsenergiequelle aufladbar und mit dem Stellglied (11) verbindbar ist, um dem Stellglied (11) die zum Verstellen der Konfiguration benötigte Antriebsenergie bereitzustellen, wobei die Antriebsenergiequelle eine Quelle für ein unter Überdruck stehendes Arbeitsfluid ist und der Energiespeicher (29) ein erster Druckspeicher ist, **dadurch gekennzeichnet, dass** das Stellglied (11) mit einem zweiten Druckspeicher (24) verbindbar ist, dessen Betriebsdruck niedriger als der des ersten Druckspeichers (29) ist, um eine Federbewegung der tragenden Rolle (8), an der das Stellglied (11) angreift, zu ermöglichen, wobei wenigstens ein Wegeventil (25; 27) das Stellglied (11) entweder mit dem ersten oder dem zweiten Druckspeicher (29; 24) verbindet, wobei das Wegeventil (25; 27) einen mit dem Antriebsaggregat verbundenen (22) Steuereingang aufweist, so dass bei einer Störung der Antriebsenergiequelle, die zum Wegfall des Überdrucks des Arbeitsfluids führt, das Wegeventil automatisch die Verbindung zum ersten Druckspeicher herstellt und so den Übergang in die zweite Konfiguration bewirkt.

2. Fahrzeug nach Anspruch 1, **dadurch gekennzeichnet, dass** das Stellglied (11) an einer inneren (8) der tragenden Rollen (7, 8) angreift.

3. Fahrzeug nach einem der vorhergehenden Ansprüche, **gekennzeichnet durch** eine Steuereinheit (32), die eingerichtet ist, bei Geradeausfahrt die erste und bei Kurvenfahrt die zweite Konfiguration des Raupenfahrwerks (2;19) einzustellen.

4. Fahrzeug nach einem der vorhergehenden Ansprüche, **gekennzeichnet durch** eine Steuereinheit (32), die eingerichtet ist, unterhalb einer Grenzgeschwindigkeit die erste und oberhalb der Grenzgeschwindigkeit die zweite Konfiguration des Raupenfahrwerks (2; 19) einzustellen.

5. Fahrzeug nach einem der vorhergehenden Ansprüche, **dadurch gekennzeichnet, dass** das Raupenfahrwerk (19) lenkbar ist.

## Claims

1. A vehicle, in particular an agricultural vehicle (1), comprising at least one track-laying assembly (2; 19) which has a plurality of support rollers (7, 8) which are arranged in succession in the direction of travel of the vehicle and around which passes a track belt (6), wherein the rollers (7, 8) are displaceable by at least one control member (11) between a first configuration in which all support rollers (7, 8) are loaded and a second configuration in which at least one outer one (7) of the support rollers (7, 8) is relieved of load, and a drive power source for delivering drive power required for displacement of the configuration, wherein an energy storage means (29) can be charged up by the drive power source and connected to the control member (11) in order to provide the control member (11) with the drive power needed for displacement of the configuration, wherein the drive power source is a source for a working fluid under an increased pressure and the energy storage means (29) is a first pressure storage means, **characterised in that** the control member (11) can be connected to a second pressure storage means (24), the operating pressure of which is lower than that of the first pressure storage means (29) to permit a spring movement of the support roller (8) which is engaged by the control member (11), wherein at least one directional control valve (25; 27) connects the control member (11) either to the first or to the second pressure storage means (29; 24), wherein the directional control valve (25; 27) has a control input connected (22) to the drive assembly so that upon a disruption with the drive power source which leads to failure of the increased pressure of the working fluid the directional control valve automatically makes the connection to the first pressure storage means and thus implements the transition into the second configuration.

2. A vehicle according to claim 1 **characterised in that** the control member (11) engages an inner one (8) of the support rollers (7, 8).

3. A vehicle according to one of the preceding claims **characterised by** a control unit (32) which is adapted to set the first configuration of the track-laying assembly (2; 19) when travelling straight and the second configuration thereof when negotiating a curve.

4. A vehicle according to one of the preceding claims **characterised by** a control unit (32) which is adapted to set the first configuration of the track-laying assembly (2; 19) below a limit speed and the second configuration thereof above the limit speed.

5. A vehicle according to one of the preceding claims **characterised in that** the track-laying assembly (19) is steerable.

## Revendications

1. Véhicule, en particulier véhicule agricole (1), comprenant au moins un train de roulement chenillé (2 ; 19) qui comporte une pluralité de galets (7, 8) disposés les uns derrière les autres dans le sens de la marche du véhicule et qui sont entourés par une bande continue (6), les galets (7, 8) étant déplaçables par l'intermédiaire d'au moins un actionneur (11) entre une première configuration, dans laquelle tous les galets porteurs (7, 8) sont sollicités, et une seconde configuration dans laquelle au moins un galet extérieur (7) des galets porteurs (7, 8) est soulagé, et comprenant une source d'énergie d'entraînement pour fournir de l'énergie d'entraînement nécessaire au déplacement de la configuration, un accumulateur d'énergie (29) pouvant être rechargé par l'intermédiaire de la source d'énergie d'entraînement et être relié à l'actionneur (11) afin de fournir à l'actionneur (11) l'énergie d'entraînement nécessaire au déplacement de la configuration, la source d'énergie d'entraînement étant une source pour un fluide de travail soumis à une surpression, et l'accumulateur d'énergie (29) étant un premier accumulateur de pression, **caractérisé en ce que** l'actionneur (11) peut être relié à un second accumulateur de pression (24) dont la pression de service est inférieure à celle du premier accumulateur de pression (29) afin de permettre un déplacement élastique du galet porteur (8) sur lequel l'actionneur (11) agit, au moins une valve directionnelle (25 ; 27) reliant l'actionneur (11) soit au premier soit au second accumulateur de pression (29, 24), la valve directionnelle (25 ; 27) comportant une entrée de commande reliée à l'organe d'entraînement (22), de sorte qu'en cas de dysfonctionnement de la source d'énergie d'entraînement provoquant la disparition de la surpression du fluide de travail, la valve directionnelle établit automatiquement la liaison avec le premier accumulateur de pression et opère ainsi le passage dans la seconde configuration.

2. Véhicule selon la revendication 1, **caractérisé en ce que** l'actionneur (11) agit sur un galet intérieur (8) des galets porteurs (7, 8).

3. Véhicule selon une des revendications précédentes, **caractérisé par** une unité de commande (32) qui est agencée pour mettre en oeuvre, en ligne droite, la première et, en courbe, la seconde configuration du train de roulement chenillé (2 ; 29).

4. Véhicule selon une des revendications précédentes, **caractérisé par** une unité de commande (32) qui est agencée pour mettre en oeuvre, au-dessous d'une vitesse limite, la première et, au-dessus de la vitesse limite, la seconde configuration du train de roulement chenillé (2 ; 19).

5. Véhicule selon une des revendications précédentes, **caractérisé en ce que** le train de roulement chenillé (19) est directeur.
